# EUROPEAN PATENT APPLICATION

(11) **EP 4 817 743 A1**
(43) Date of publication of application: **07.10.2026**
(21) Application number: 25167499.0
(22) Date of filing: 31.03.2025
(51) Int. Cl.: B03C 1/12, B03C 1/14, B03C 1/247, B03C 1/30

(54) **POWDER SEPARATION DEVICE OF AN APPARATUS FOR PROCESSING POWDER MATERIAL FOR MANUFACTURING THREE-DIMENSIONAL WORKPIECES**

(71) Applicant: Nikon SLM Solutions AG, 23560 Lübeck (DE)
(72) Inventor: NEGENDANK, Philip, 23560 Lübeck (DE); GÖDEKE, Kai, 23560 Lübeck (DE); DIAZ DEL CASTILLO, Juan Miguel, 23560 Lübeck (DE)
(74) Representative: Seemann & Partner Patentanwälte mbB

(57) **Abstract**

The invention relates inter alia to a powder separation device (10) of an apparatus (A) for processing powder material for manufacturing three-dimensional workpieces, in particular an apparatus (A) for manufacturing three-dimensional workpieces, for separating a metallic powder material mix of magnetic, in particular ferromagnetic, metallic powder particles and nonmagnetic powder particles, preferably nonmagnetic metallic powder particles, wherein the powder separation device (10) comprises a helical-like or spiral-like conveyance path, in particular for the magnetic metallic powder particles, and/or wherein at least one, preferably actively operable or operated, powder removal unit (60) is provided in the, preferably a helical-like or spiral-like, conveyance path of the metallic powder particles, in particular of the magnetic metallic powder particles.

## Description

The invention relates to a powder separation device of an apparatus for processing powder material for manufacturing three-dimensional workpieces, in particular an apparatus for manufacturing three-dimensional workpieces.

Moreover, the invention relates to a method for operating an apparatus for processing powder material for manufacturing three-dimensional workpieces. In addition, the invention concerns an apparatus for processing powder material for manufacturing three-dimensional workpieces, in particular an apparatus for manufacturing three-dimensional workpieces.

The powder bed fusion process is an additive manufacturing process. In this process, powder layers are added on top of each other to form a powder bed on a support plate. Before adding a new layer of powder, the existing layer is heated to bond the powder particles and the previous layer. The powder bed fusion process fuses cross sections of a workpiece with corresponding powder layers to form the workpiece. This is done by scanning the cross sections with a radiation beam. The term "powder bed fusion process" (PBFP) includes in particular all other processes that allows to stick parts of a powder bed together using radiation. The powder bed fusion process can be used to make metal parts by fusing metal powder particles. Moreover, Laser powder bed fusion (LPBF) is a type of 3D printing where a layer of powder is exposed to a beam of energy, such as a laser, to fuse the particles together. The workpiece is made in layers of powder.

In the prior art, the upper layer of a powder bed is irradiated with an energy source in a process chamber in so-called powder bed processes as an additive manufacturing process, whereby the particles of the powder bed are bonded to each other, e.g. by sintering and/or welding and/or melting and/or by triggering a chemical reaction. After irradiating a layer, e.g. by means of electromagnetic radiation, another powder layer is applied by a powder bed coater so that another powder layer can then be irradiated again. These processes are repeated until the workpiece to be produced can be removed from the powder bed.

Powder management and powder handling are important in the manufacturing process, as new or recycled powder is regularly fed into the process chamber via powder tanks. In addition, powder that has already been used is collected in powder tanks and then fed to a processing system or device.

The powder bed process is an additive or generative layering process for the production of three-dimensional workpieces, with which powdery, in particular metallic and/or ceramic raw materials are processed into three-dimensional, complex-shaped workpieces. For this purpose, a raw material powder layer is applied to a carrier in a process chamber and, depending on the desired geometry of the workpiece to be produced, is exposed to laser radiation or partial radiation as electromagnetic radiation in a location-selective manner. The electromagnetic radiation penetrating the powder layer causes heating and thus fusion or sintering of the raw material powder particles. Further layers of raw material powder are then successively applied to an already solidified layer on the carrier until the finished workpiece has the appropriate shape and size. For example, ceramic, metal or plastic materials as well as material mixtures are used as raw material powder layers.

For example, EP 3 023 227 A1 discloses a device for producing three-dimensional workpieces by powder bed fusion, the device having a process chamber in which a carrier for the workpiece to be produced and a powder application device for applying a layer of a raw material powder to the carrier are located. The process chamber is provided, for example, with a powder inlet for feeding raw material powder to the powder application device and a powder outlet for discharging excess raw material powder from the process chamber. A powder circuit line, in which a conveying device for conveying the raw material powder through the powder circuit line is arranged, connects the powder outlet of the process chamber with the powder inlet of the process chamber.

In addition, DE 10 2019 116 503 A1 discloses a method and a device for producing a three-dimensional multi-material workpiece.

It is an object of the invention to improve the reprocessing, in particular the separation, of ferromagnetic and non-ferromagnetic powder particles which are used for additive manufacturing processes, for example by multi-material additive manufacturing processes like by powder bed fusion or laser beam melting.

The object is solved by a powder separation device of an apparatus for processing powder material for manufacturing three-dimensional workpieces, in particular an apparatus for manufacturing three-dimensional workpieces, for separating a metallic powder material mix of magnetic, in particular ferromagnetic, metallic powder particles and nonmagnetic powder particles, preferably nonmagnetic metallic powder particles, wherein the powder separation device comprises a helical-like or spiral-like conveyance path, in particular for the magnetic metallic powder particles, and/or wherein at least one, preferably actively operable or operated, powder removal unit is provided in the, preferably a helical-like or spiral-like, conveyance path of the metallic powder particles, in particular of the magnetic metallic powder particles.

The basic idea of the invention is to increase the quality of separation of a metallic powder material mix, comprising magnetic metallic powder particles and nonmagnetic powder particles, preferably nonmagnetic metallic powder particles, providing a helical-like or spiral-like conveyance path for the metallic powder particles, wherein the length of the conveyance path and/or the conveyance time of the magnetic metallic powder particles are increased, in case the magnetic metallic powder particles are conveyed in a helical-like or spiral-like way, for example around an outer circumference of a drum body of the powder separation device. During the conveyance of the magnetic metallic powder particles, the magnetic metallic powder particles are kept and/or moved along helical-like or spiral-like, conveyance path of the metallic powder particles by magnetic forces of the magnets of the arrangement of magnets. By means of the invention, the separation length for the magnetic metallic powder particles is improved.

Additionally or alternatively, the separation of the metallic powder material mix can be improved by the provision of at least one, preferably actively operable or operated, powder removal unit in the, preferably a helical-like or spiral-like, conveyance path of the metallic powder particles, in particular of the magnetic metallic powder particles, which in particular is configured to remove adhering agglomerations of, preferably magnetic, metallic powder particles, for example spikes from an conveyance path of the metallic powder particles, preferably an outer circumference of a drum body of the powder separation device or which is configured to clean the conveyance path of the metallic powder particles and/or the outer circumference of the drum body. By means of the powder removal unit for the removal of the metallic powder particles, in particular of the magnetic metallic powder particles, agglomerations of the powder particles are avoided or removed from the, preferably a helical-like or spiral-like, conveyance path of the metallic powder particles, in particular of the magnetic metallic powder particles.

Within the context of the invention, the conveyance path comprises a conveyance path section, where the powder removal unit can be provided. The conveyance path section for the removal of the powder particles can be flat and/or curved in one plane or curved in all three dimensions.

A preferred embodiment of the powder separation device is characterized in that a, preferably movable or rotatable, arrangement of magnets is provided for the movement of the magnetic metallic powder particles along the helical-like or spiral-like conveyance path, wherein the arrangement of magnets is enclosed by the helical-like or spiral-like conveyance path. By means of the arrangement of magnets and the magnetic forces, the magnetic metallic powder particles can be or are conveyed.

Advantageously, the powder separation device comprises a, preferably hollow-cylindrical or hollow, drum body, wherein the drum body has an inner side and an outer side and a longitudinal direction and an outer circumference, wherein the arrangement of magnets is provided in the inner side the drum body, wherein the drum body and the arrangement of magnets are movable, in particular rotatable, relative to one another and wherein the helical-like or spiral-like conveyance path for the magnetic metallic powder particles is provided on the outer circumference of the drum body.

Preferably, the arrangement of magnets are rotated inside the drum body in relation to the, preferably stationary, drum body. While the magnetic metallic powder particles are conveyed along the helical-like or spiral-like conveyance path, the nonmagnetic powder particles, preferably nonmagnetic metallic powder particles, of the provided metallic powder material mix are separated from the magnetic metallic powder particles.

The metallic powder material mix to be separated is a collected mixture of metal powder particles from a process for manufacturing a three-dimensional workpiece with at least two different metal powder materials (magnetic metallic powder particles and nonmagnetic powder particles, preferably nonmagnetic metallic powder particles,).

Within the scope of the invention, the drum body can be hollow-cylindrical or hollow or can have for example an oval cross-section or a frustoconical-like form or the like. In particular, in order to move the magnetic metallic powder particles along the helical-like or spiral-like conveyance path, the arrangement of, preferably electromagnetic, magnets is movable, in particular rotatable, in relation to the outer and preferably stationary drum body.

Pursuant to another advantageous embodiment, the arrangement of magnets is, preferably linearly, movable along the longitudinal axis of the drum body. Furthermore, the arrangement of magnets can also be rotatable around its axis of rotation and, preferably simultaneously and/or linearly, movable along the longitudinal axis of the drum body. In particular, the arrangement of magnets are rotatable or rotated in a direction, which is opposite to the movement of the magnetic metallic powder particles along the conveyance path on the circumference of the drum body.

In a further embodiment, the powder separation device comprises a, preferably hollow-cylindrical or hollow, drum body, wherein the drum body has an inner side and an outer side and a longitudinal direction and an outer circumference, wherein the at least one, preferably actively operable or operated, powder removal unit is arranged at the outer side of the drum body. Hereby, the agglomerations of, preferably magnetic, metallic powder particles on the drum body can be removed for example mechanically or by pressurization with a gaseous medium, in particular air or an inert gas such as argon.

In particular, the powder removal unit is actively operable or can be actively operated. By an activation of the powder removal unit, the agglomerations of adhering magnetic metallic powder particles, like spikes or the like, on the drum body are removed from the circumference or the outer surface of the drum body very efficiently. Moreover, it is possible to remove the agglomerations of, preferably magnetic, metallic powder particles for example by a vibrating powder removal unit.

In addition, a helical-like or spiral-like conveyance path on the outer circumference of the drum body for the magnetic metallic powder particles can be provided by a, preferably rotating, helical-like magnetic field effected by the arrangement of magnets, which is accommodated inside the drum body.

According to another preferred embodiment, at least one helical fin, provided on the outer side of the drum body along the longitudinal direction, and/or at least one helical groove, provided on the outer side of the drum body along the longitudinal direction, are configured to form the, preferably a helical-like or spiral-like, conveyance path on the outer circumference of the drum body. Hereby it is possible to guide the magnetic metallic powder particles along the drum body in a screw-like form over the circumference of the drum body. For example, the magnetic metallic powder particles can have a conveyance path, which is longer than the length of the circumference of the drum body.

Pursuant to a preferred embodiment, the at least one helical fin and/or at least one helical groove extend on the outer side of the drum body between an inlet port for the metallic powder mix and an outlet port for the separated magnetic, in particular ferromagnetic, metallic powder particles of the metallic powder material mix. At the inlet port a conveying device like a chute or a conveyor belt is provided to transfer the metallic powder material mix to the drum body. The conveying device can comprise a downpipe or a funnel through which the metallic powder material mix can be transferred to the drum body. The downpipe or the funnel can comprise a powder outlet, preferably at its lower end, which can be provided at the inlet port. Furthermore, a conveying device, like a chute or a conveyor belt is provided to transport the separated magnetic metallic powder particles from the outlet port to a container or the like for the magnetic metallic powder particles.

Moreover, an embodiment of the powder separation device is characterized in that a housing or an enclosure is provided for the conveyance path and/or for the at least one helical fin and/or at least one helical groove. By providing an outer housing or an outer enclosure for the conveyance path, which can be arranged around the drum body in order to accommodate the drum body, the consumption for inert gas, e.g. argon, can be reduced, as the space enclosed by the housing or enclosure needs to be kept inert for the separation process. Therefore, it is not necessary to provide an inert gas atmosphere for entire housing of a powder separation device or a powder separation module.

Another embodiment of the powder separation device is characterized in that the housing or the enclosure has a helical-like form extending along the longitudinal direction of the drum body. Hereby, the housing or enclosure are formed according to the form of the screw-like or helical-like conveyance path of the magnetic metallic powder particles, conveyed on the outer circumference of the drum body by means of the magnetic forces of the arrangement of magnets inside the drum body.

Advantageously, the at least one helical fin and/or at least one helical groove are configured to guide the magnetic metallic powder particles of the metallic powder material mix along the outer circumference of the drum body in a helical-like direction. Within the scope of the invention, the helical fin could be designed a guiding member or a recess or groove or the like.

Besides, according to another embodiment of the powder separation device, the conveyance path for the magnetic metallic powder particles is longer than the circumference length of the drum body, wherein in particular the conveyance path for the magnetic metallic powder particles is n times greater (n > 1,0; 1,1; 1,2; ....) than the circumference length of the drum body.

In a further embodiment of the powder separation device, the, in particular helical-like or spiral-like, conveyance path for the magnetic metallic powder particles is at least longer than a quarter or a third or half of the circumference length of the drum body.

In another aspect of the powder separation device, the drum body is stationary and the arrangement of magnets is rotatable around an axis of rotation, wherein in particular a drive is provided for rotating the arrangement of magnets inside the drum body.

According to another embodiment of the powder separation device, the drum body is rotatable around an axis of rotation and the arrangement of magnets is stationary, wherein in particular a drive is provided for rotating the drum body.

Preferably, the powder separation device comprises a discharge port for the nonmagnetic powder particles, preferably nonmagnetic metallic powder particles, wherein in particular a discharge port for the nonmagnetic particles is arranged below the drum body and/or wherein in particular the discharge port for the nonmagnetic powder particles, preferably nonmagnetic metallic powder particles, is arranged between an inlet port for the metallic powder mix and an outlet port for the separated magnetic powder particles. In particular, a funnel or a conveying channel or a chute are provided in order to collect and/or to remove the nonmagnetic powder particles, preferably non-magnetic metallic powder particles, from the area of the drum body. The nonmagnetic powder particles, preferably nonmagnetic metallic powder particles, are not conveyed on the circumference of the drum body by the magnetic forces of the arrangement of magnets, wherein the nonmagnetic powder particles, preferably nonmagnetic metallic powder particles, can fall by gravitational forces to the bottom of the discharge port for the nonmagnetic powder particles, preferably non-magnetic metallic powder particles,. In case, a housing or an enclosure is provided for the helical-like or spiral-like conveyance path, the housing or enclosure can have an opening, preferably at the bottom, in order to let the nonmagnetic powder particles, preferably nonmagnetic metallic powder particles, pass or fall through the opening.

Advantageously, the powder separation device comprises a feeding conveyor for conveying the metallic powder material mix to be separated, to the conveyance path, in particular to the drum body and/or a removal conveyor for conveying the magnetic metallic powder particles from the conveyance path, in particular from the drum body, preferably arranged at the outlet port.

The longitudinal axis of the feeding conveyor can be inclined relative to the longitudinal axis of the drum body and/or relative to the axis of rotation of the drum body. The longitudinal axis of the feeding conveyor can be parallel relative to the longitudinal axis of the drum body and/or relative to the axis of rotation of the drum body. The longitudinal axis of the feeding conveyer and/or the longitudinal axis of the drum body and/or the axis of rotation of the drum body can be parallel to a horizontal axis.

Pursuant to a preferred embodiment, the arrangement of magnets comprises the plurality of, in particular electromagnetic, magnets, wherein the magnets are arranged in a predetermined and/or regular order, preferably inside the drum body.

According to a further preferred embodiment, the arrangement of magnets comprises, preferably parallel, rows of magnets, each having a longitudinal extension, and a middle axis, preferably an axis of rotation of the arrangement of magnets, wherein the rows of magnets are arranged along the middle axis in regular distances and/or the longitudinal extensions of magnets are arranged parallel to the middle axis or the longitudinal extensions of the magnets are arranged with a skewed angle to the middle axis.

Pursuant to an advantageous embodiment, the magnets are arranged in a helical-like or spiral-like form along the longitudinal direction of the drum body.

Another embodiment of the powder separation device is characterized in that the least one powder removal unit is arranged at an outlet port of the powder separation device for the, preferably magnetic, metallic powder particles.

In one embodiment, the at least one powder removal unit comprises at least one powder removal flap or an array of, preferably movable or pivotable, powder removal flaps, wherein in particular the at least one powder removal flap or the flaps are made from a magnetic, in particular ferromagnetic material. The movement of the powder removal flaps can be effected by the magnets of the movable arrangement of magnets inside the drum body. Hereby, the powder removal flaps can be magnetic or comprise magnetic elements. In another embodiment the powder removal flaps can be driven by a drive, like and electric motor.

In addition, in one embodiment of the powder separation device, the least one powder removal unit, in particular at least one powder removal flap, is configured to be in a, preferably wiping or scraping, contact with the circumference of the drum body.

According to a preferred embodiment, the powder removal unit can be a, in particular rigid, separator plate, wherein in particular one side of the separator plate can rest against the outside or the circumference of the drum body or one side of the separator plate can be in contact with the outside of the circumference of the drum body. By means of the separator plate, the magnetic powder particles, adhering to the outside or the circumference of the drum body, are separated and/or guided and/or removed out of the magnetic field, preferably of the arrangement of magnets. The removed magnetic powder particles can then fall into a powder outlet or can be collected in a powder container or the like. In particular, the removed magnetic powder particles be directed out of the magnetic field of the arrangement of magnets.

In case the powder removal unit is designed as a rigid separator plate, it is advantageous pursuant to an embodiment that the rigid separator plate can be aligned or positioned vertically to the circumference of the drum body so that the magnetic powder particles can be removed easily from the drum body. Hereby, a large part of the weight force of the separator plate acts on the powder particles. In a further preferred embodiment, an inclination of the separator plate to the conveyance path or the circumference of the drum of less than 90°, e.g. 80°, is advantageous, so that the powder particles to be removed do not fall in free fall, which results in a less turbulence of the powder particles.

In a further embodiment, the powder removal unit, which is provided for removing the magnetic powder from the drum body, can comprise at least one or more than one additional and/or external magnet or magnets, which are preferably arranged outside the drum body. By means of the magnetic fields of the at least one additional and/or external magnet, outside of the drum body, the magnetic powder particles or agglomerations thereof, adhering to the outside or the circumference of the drum body, can be removed from the drum body, wherein the magnetic powder particles can be separated by pulling the magnetic powder particles from the outside or the circumference of the drum body against the magnetic forces of the top magnets, which are arranged inside the drum body, and/or by directing them out of the magnetic field of the magnets, arranged inside the drum body. The removed powder particles can fall into the powder outlet or can be collected in a powder container or the like.

In the context of the invention, the powder removal unit can comprise at least one iron core or the like, which can be provided in particular outside the drum body, preferably near or in the region of the outlet port, wherein by means of the at least one iron core the magnetic fields of the magnets arranged inside the drum body, in particular of the arrangement of magnets, are deflected or diverted at or near the end of the conveyance path.

In order to improve the removal of the magnetic metallic powder particles from the drum body, a suction device and/or a blower device can be provided. By means of the suction device, the metallic powder particles can be removed from the drum body or from the surrounding area of the drum body by applying a vacuum. Advantageously, the metallic powder particles are blown from the outside or the circumference and/or from the surroundings of the drum body by means of the blower device.

Within the scope of the invention, it is noted that the powder removal unit can comprise one or several embodiments or elements, as disclosed and described herein in this application.

According to another embodiment, the longitudinal direction of the drum body is arranged in a non-vertical direction, preferably in a horizontal direction, in particular with an inclination angle between 0° to 60°, preferably to 45° or 30° in relation to a horizontal plane.

The object is further solved by a use of a powder separation device for separating of a metallic powder material mix, as described above, wherein the metallic powder material mix comprises magnetic, in particular ferromagnetic, metallic powder particles and non-magnetic metallic powder particles. In order to avoid repetitions, reference is expressly made to the above explanations.

Furthermore, the object is also solved by a method for operating an apparatus for processing powder material for manufacturing three-dimensional workpieces, in particular an apparatus for manufacturing three-dimensional workpieces, further in particular an apparatus for manufacturing three-dimensional workpieces by exposing powder layers to electromagnetic radiation or particle radiation in a process chamber, wherein a metallic powder material mix, comprising magnetic, in particular ferromagnetic, metallic powder particles and non-magnetic powder particles, preferably nonmagnetic metallic powder particles, is separated by means of a powder separating device according to the above mentioned aspects. Reference is also made to the above explanations.

The object is also solved by an apparatus for processing powder material for manufacturing three-dimensional workpieces, in particular an apparatus for manufacturing three-dimensional workpieces, further in particular an apparatus for manufacturing three-dimensional workpieces by exposing powder layers to electromagnetic radiation or particle radiation in a process chamber, wherein the apparatus has at least one powder separation device, as explained above, in particular according to any of the claims 1 to 17, and/or wherein the apparatus is configured to be operated according to a method as described above. In order to avoid repetitions, reference is expressly made to the above explanations.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a perspective illustration of a separation drum of an apparatus for manufacturing three-dimensional workpieces by irradiating layers of a raw material powder mix with electromagnetic radiation or particle radiation according to a first embodiment,
- Fig. 2: another perspective illustration of a drum of Fig. 1,
- Fig. 3: a perspective illustration of the separation drum of an apparatus for manufacturing three-dimensional workpieces by irradiating layers of a raw material powder mix with electromagnetic radiation or particle radiation according to another embodiment,
- Fig. 4: a perspective illustration of a separation drum of an apparatus for manufacturing three-dimensional workpieces by irradiating layers of a raw material powder mix with electromagnetic radiation or particle radiation according to a further embodiment,
- Fig. 5a, 5b: schematically the various views of an arrangement of magnets for a separation drum,
- Fig. 6a, 6b, 6c: schematically illustrations of further arrangements of magnets for the separation drum,
- Fig. 7: schematically a perspective view of another separation drum of an apparatus for manufacturing three-dimensional workpieces by irradiating layers of a raw material powder mix with electromagnetic radiation or particle radiation.

In the drawings, the same or similar types of elements or respectively corresponding parts are provided with the same reference numbers in order to prevent the item from needing to be reintroduced.

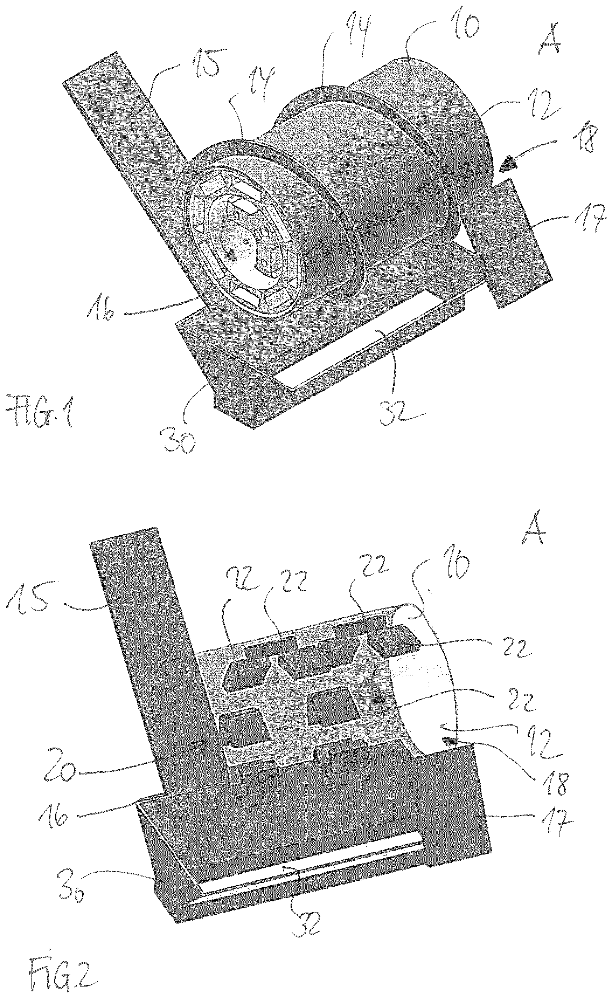

The perspective illustration of Fig. 1 shows schematically a separation drum 10 of a schematically designated apparatus A for manufacturing three-dimensional workpieces by irradiating layers of a raw material powder mix, comprising magnetic metallic powder particles and nonmagnetic metallic powder particles with electromagnetic radiation or particle radiation according to a first embodiment. The apparatus A is an apparatus for manufacturing a three-dimensional workpieces by means of an additive manufacturing process in which a raw material powder mix is used, for example selective laser melting or selective laser sintering.

After a manufacturing step of a layer of the workpiece in a process chamber, the loose metallic powder material mix with magnetic metallic powder particles and nonmagnetic metallic powder particles is removed from the process chamber and fed to the separation drum 10 by means of the chute 15. The separation drum 10 comprises a cylindrical drum body 12, wherein the drum body is preferably horizontally aligned. The drum body 12 is provided with a helical-like fin 14 on the outer circumference. According to another (not shown) embodiment, the drum body 12 can have a frustoconical form or the like.

Fig. 2 shows schematically another perspective illustration of a drum of Fig. 1, wherein the inside of the separation drum 10 is shown.

Inside of the drum body 12 of the cylindrical separation drum 10, a rotatable or rotated arrangement 20 of a plurality of magnets 22 is provided. The permanent magnets 22 of the arrangement 20 are arranged in a preferred, in particular helical-like, order. The arrangement 20 of the magnets 22 are rotated in relation to the stationary drum body 12.

At the bottom end of the chute 15 the metallic powder material mix is separated by means of the separation drum 10. As the nonmagnetic metallic powder particles are not attracted by magnetic forces of the moving magnets 22, the nonmagnetic metallic powder particles fall into a funnel 30 or the like, having an opening 32 through which the nonmagnetic powder particles pass. The separated none metallic powder particles are afterwards collected in a (not shown) container or the like for reprocessing or recycling.

The magnetic powder particles of the fed metallic powder material mix are attracted by the magnetic forces of the moved or moving magnets 22, which are provided inside of the drum body 12. During the counterclockwise rotation of the arrangement 20 with the magnets 22 the attracted magnetic metallic powder particles are conveyed along a helical-like or spiral-like conveyance path along the outer circumference of the stationary drum body 12. The conveyance path of the magnetic metallic powder particles is longer than the circumference of the drum body. Due to the helical-like or spiral-like conveyance path for the magnetic metallic powder particles, the separation length and/or the separation time can be easily scaled to a preferred or predetermined length and/or time. In particular the magnetic metallic powder particles are conveyed more than one time around the circumference of the drum body 12.

The helical-like fin 14 has further the function to guide the conveyed magnetic metallic powder particles at an inlet port 16 in the area at the bottom of the chute 15 to an outlet port 18 at the end of the conveyance path. At the outlet port 18 the separated magnetic metallic powder particles are removed from the circumference of the drum body 12 by means of a scraper or a chute 15 or the like. The separated magnetic metallic powder particles are collected in a container or the like for reprocessing or recycling.

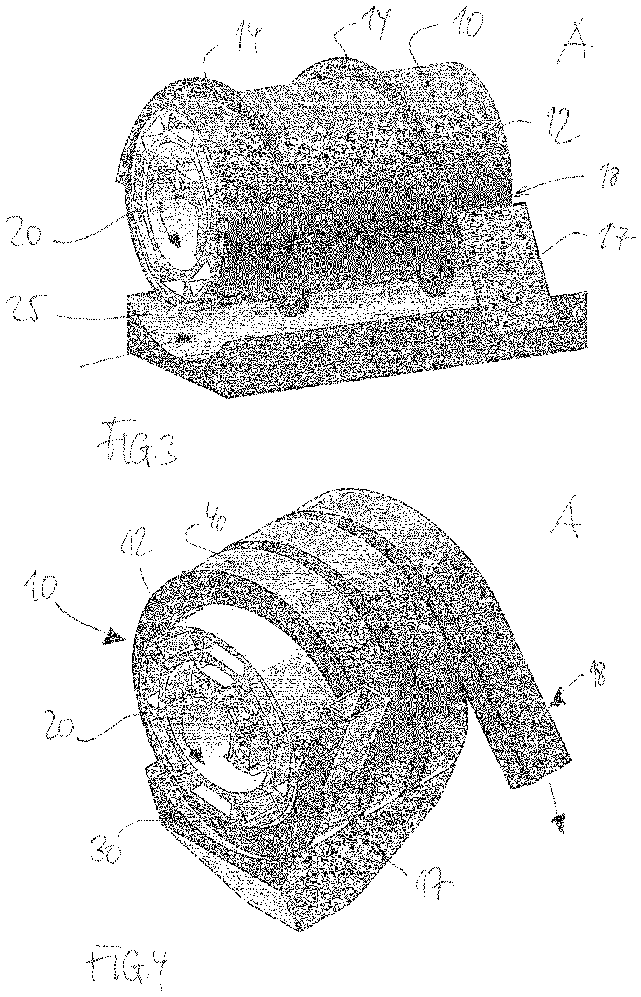

In Fig. 3a perspective illustration of the separation drum 10 for apparatus for manufacturing three-dimensional workpieces by irradiating layers of a raw metallic powder material mix with electromagnetic radiation or particle radiation is shown. According to this embodiment, the metallic powder material mix is fed by a, preferably horizontally orientated, fluid bed 25 or the like. The magnetic metallic powder particles are attracted by the magnets 22 of the arrangement 20 onto the circumference of the drum body and are conveyed in a helical-like way along the circumference and simultaneously in the longitudinal direction of the drum body 12, while the nonmagnetic metallic powder particles are conveyed along the longitudinal direction of the drum body 12 in the fluid bed 25. In other embodiments, the metallic powder material mix is fed to the separation drum by means of a, in particular vibrating, feeder or belt or the like.

The perspective illustration of a separation drum 10 in Fig. 4 shows a separation drum 10 with an enclosed helical-like guiding tube 40 to provide a helical-like conveyance path of the magnetic metallic powder particles of the fed metallic powder material mix. The guiding tube 40 comprises at the bottom (not shown) openings for the nonmagnetic metallic powder particles, which fall through the openings into the funnel 30. The magnetic metallic powder particles, which are attracted by means of the magnets of the rotatable arrangement 20, stuck on the inner walls of the guiding tube 40, which are adjacent to the outer circumference of the arrangement 20 with the magnets 22. The guiding tube 40 has preferably a square or rectangular cross section.

Due to the enclosed guiding of the magnetic metallic powder particles inside the guiding tube 40, the volume in contact with the metallic powder material mix is minimized, wherein preferably a cross-contamination due to flying powder particles is reduced.

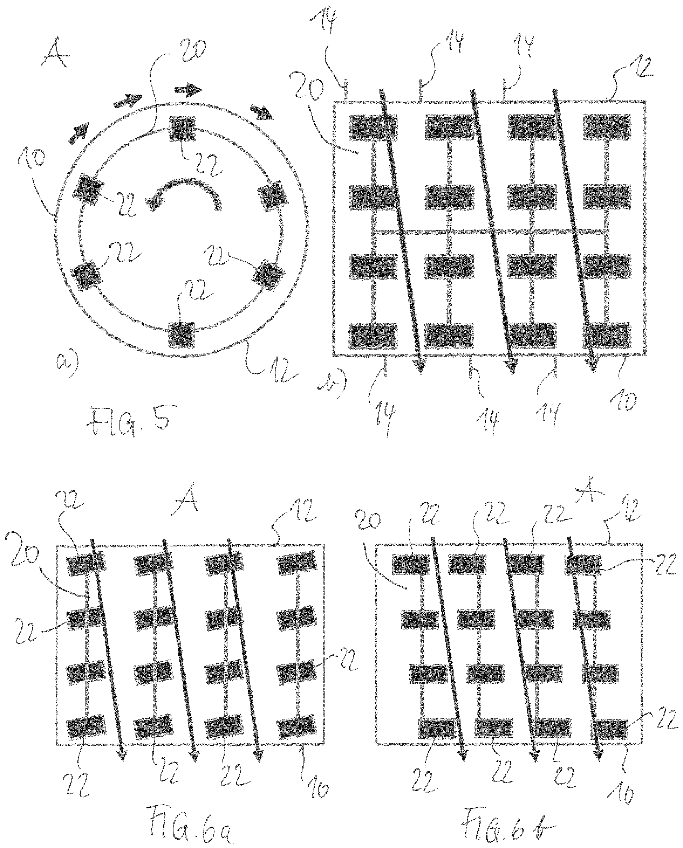

Figs. 5a and 5b show the various schematic views of an arrangement 20 of magnets 22 for a separation drum. The side view of Figs. 5a shows the anticlockwise rotation of the arrangement 20 with the magnets 22 inside the drum body 12, while the conveyance direction of the conveyed magnetic metallic powder particles is in the clockwise direction. The top few of Fig. 5b shows the axial movement of the conveyed magnetic metallic powder particles along the longitudinal direction or the axis of rotation of the drum body 12. The magnets 22 are arranged in rows and in regular distances in each row. The magnetic fields of the magnets 22 are aligned parallel to the axis of rotation of the drum body 12. The drum body 12 is provided with a, preferably helical-like or spiral-like, circumferential fin 14 on the outer circumference.

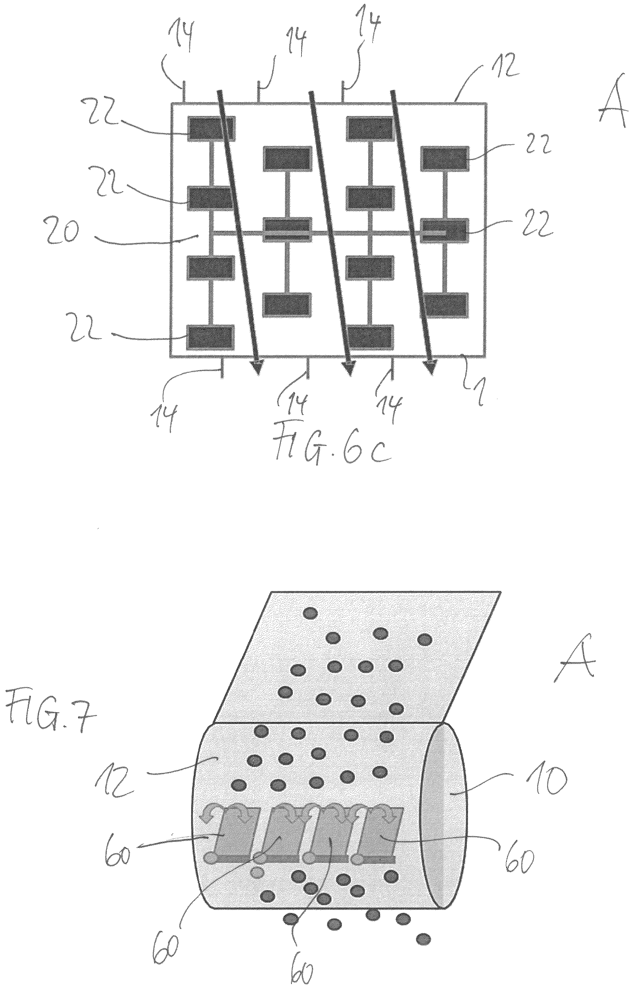

Further arrangements of magnets for the separation drum 10 are schematically shown in Figs. 6a, 6b and 6c each in top views. The embodiment in Fig. 6a provides an arrangement 20 with magnets 22 with magnetic fields, which are inclined to the axis of rotation of the drum body 12, while the embodiment of Fig. 6b shows an arrangement 20 with magnets 22 which are shifted, preferably in regular distances, along the axis of rotation of the drum body 12. Preferably, according to the embodiments of Figs. 6a and 6b, the drum body 12 has no circumferential fin 14 on the outer circumference. In other embodiments the drum body 12 is provided with a, preferably helical-like or spiral-like, circumferential fin 14 on the outer circumference.

A further embodiment of an arrangement 20 with magnets 22 is shown in Fig. 6c, wherein the magnets of two rows of magnets 22, which are arranged side by side along the axis of rotation of the drum body 12, are shifted in the circumferential direction are the rotation direction of the arrangement 20. According to this embodiment, the drum body 12 is provided with a, preferably helical-like or spiral-like, circumferential fin 14 on the outer circumference.

The schematic perspective illustration of Fig. 7 shows a view of another separation drum 10 of an apparatus for manufacturing three-dimensional workpieces by irradiating layers of a raw metallic powder material mix with electromagnetic radiation or particle radiation. In order to clean the outer surface of the drum body 12 from spikes or accumulations of magnetic metallic powder particles, several pivotable flaps 60 are arranged, preferably at a discharge port for the magnetic metallic powder particles. According to this embodiment, a powder removal unit is provided by the array of flaps 60.

Preferably, the flaps 60 are made from magnetic or ferromagnetic material. The free ends of the flaps 60 are positioned on the surface or near the surface of the drum body 12. Due to the reciprocating magnetic polarity, caused by the (here not shown) magnets of the arrangement inside the drum body 12, the movement of the flaps 60 is caused. The flaps 60 are oscillating by means of the magnetic forces, such that spikes or agglomerations of magnetic metallic powder particles are removed from the surface. The flaps 60 prevent the formation of spikes by wiping the surface of the cylindrical drum body 12.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

Aspects of the invention are embodied in the following embodiments, which may be taken alone or in combination with each other:
Embodiment 1. A powder separation device (10) of an apparatus (A) for processing powder material for manufacturing three-dimensional workpieces, in particular an apparatus (A) for manufacturing three-dimensional workpieces, for separating a metallic powder material mix of magnetic, in particular ferromagnetic, metallic powder particles and nonmagnetic powder particles, preferably nonmagnetic metallic powder particles, wherein the powder separation device (10) comprises a helical-like or spiral-like conveyance path, in particular for the magnetic metallic powder particles, and/or wherein at least one, preferably actively operable or operated, powder removal unit (60) is provided in the, preferably a helical-like or spiral-like, conveyance path of the metallic powder particles, in particular of the magnetic metallic powder particles.
Embodiment 2. The powder separation device (10) according to embodiment 1, characterized in that a, preferably movable or rotatable, arrangement (20) of magnets (22) is provided for the movement of the magnetic metallic powder particles along the helical-like or spiral-like conveyance path, wherein the arrangement (20) of magnets (22) is enclosed by the helical-like or spiral-like conveyance path.
Embodiment 3. The powder separation device (10) according to embodiment 2, characterized in that the powder separation device (10) comprises a, preferably hollow-cylindrical or hollow, drum body (12), wherein the drum body (12) has an inner side and an outer side and a longitudinal direction and an outer circumference, wherein the arrangement (20) of magnets (22) is provided in the inner side the drum body (12), wherein the drum body (12) and the arrangement (20) of magnets (22) are movable, in particular rotatable, relative to one another and wherein the helical-like or spiral-like conveyance path for the magnetic metallic powder particles is provided on the outer circumference of the drum body (12).
Embodiment 4. The powder separation device (10) according to any of the embodiments 1 to 3, characterized in that the powder separation device (10) comprises a, preferably hollow-cylindrical or hollow, drum body (12), wherein the drum body (12) has an inner side and an outer side and a longitudinal direction and an outer circumference, wherein the at least one, preferably actively operable or operated, powder removal unit (60) is arranged at the outer side of the drum body (12).
Embodiment 5. The powder separation device (10) according to embodiment 3 or 4, characterized in that at least one helical fin (14), provided on the outer side of the drum body (12) along the longitudinal direction, and/or at least one helical groove, provided on the outer side of the drum body (12) along the longitudinal direction, are configured to form the, preferably a helical-like or spiral-like, conveyance path on the outer circumference of the drum body (12).
Embodiment 6. The powder separation device (10) according to embodiment 5, characterized in that the at least one helical fin (14) and/or at least one helical groove extend on the outer side of the drum body (12) between an inlet port for the metallic powder mix and an outlet port for the separated magnetic, in particular ferromagnetic, metallic powder particles of the metallic powder material mix.
Embodiment 7. The powder separation device (10) according to any of the embodiments 1 to 6, characterized in that a housing or an enclosure is provided for the conveyance path and/or for the at least one helical fin (14) and/or at least one helical groove.
Embodiment 8. The powder separation device (10) according to embodiment 7, characterized in that the housing or the enclosure has a helical-like form extending along the longitudinal direction of the drum body (12).
Embodiment 9. The powder separation device (10) according to any of the embodiments 5 to 8, characterized in that the at least one helical fin (14) and/or at least one helical groove are configured to guide the magnetic metallic powder particles of the metallic powder material mix along the outer circumference of the drum body (12) in a helical-like direction.
Embodiment 10. The powder separation device (10) according to any of the embodiments 3 to 9, characterized in that the conveyance path for the magnetic metallic powder particles is longer than the circumference length of the drum body (12), wherein in particular the conveyance path for the magnetic metallic powder particles is n times greater (n > 1,0; 1,1; 1,2; ...) than the circumference length of the drum body (12).
Embodiment 11. The powder separation device (10) according to any of the embodiments 3 to 10, characterized in that the drum body (12) is stationary and the arrangement (20) of magnets (22) is rotatable around an axis of rotation, wherein in particular a drive is provided for rotating the arrangement (20) of magnets (22) inside the drum body (12).
Embodiment 12. The powder separation device (10) according to any of the embodiments 1 to 11, characterized in that the powder separation device (10) comprises a discharge port (30) for the non-magnetic powder particles, preferably nonmagnetic metallic powder particles, wherein in particular discharge port (30) for the nonmagnetic particles is arranged below the drum body (12) and/or wherein in particular the discharge port (30) for the nonmagnetic powder particles, preferably nonmagnetic metallic powder particles, is arranged between an inlet port (16) for the metallic powder mix and an outlet port (18) for the separated magnetic metallic powder particles.
Embodiment 13. The powder separation device (10) according to any of the embodiments 1 to 9, characterized in that the powder separation device (10) comprises a feeding conveyor for conveying the metallic powder material mix to be separated, preferably arranged at the inlet port, to the conveyance path, in particular to the drum body (12), and/or a removal conveyor for conveying the magnetic metallic powder particles from the conveyance path, in particular from the drum body (12), preferably arranged at the outlet port.
Embodiment 14. The powder separation device (10) according to any of the embodiments 2 to 13, characterized in that the arrangement (20) of magnets (22) comprises the plurality of, in particular electromagnetic, magnets (22), wherein the magnets (22) are arranged in a predetermined and/or regular order, preferably inside the drum body (12).
Embodiment 15. The powder separation device (10) according to embodiment 14, characterized in that the arrangement (20) of magnets (22) comprises, preferably parallel, rows of magnets (22), each having a longitudinal extension, and a middle axis, preferably an axis of rotation of the arrangement (20) of magnets (22), wherein the rows of magnets (22) are arranged along the middle axis in regular distances and/or the longitudinal extensions of magnets (22) are arranged parallel to the middle axis or the longitudinal extensions of the magnets (22) are arranged with a skewed angle to the middle axis.
Embodiment 16. The powder separation device (10) according to embodiment 14 or 15, characterized in that the magnets (22) are arranged in a helical-like or spiral-like form along the longitudinal direction of the drum body (12).
Embodiment 17. The powder separation device (10) according to any of the embodiments 1 to 16, characterized in that the least one powder removal unit (60) is arranged at an outlet port (18) of the powder separation device (10) for the magnetic metallic powder particles.
Embodiment 18. The powder separation device (10) according to any of the embodiments 1 to 17, characterized in that the at least one powder removal unit (60) comprises at least one, preferably movable or pivotable, powder removal flap (60) or an array of, preferably movable or pivotable, powder removal flaps (60), wherein in particular the at least one powder removal flap (60) or the flaps (60) are made from a magnetic, in particular ferromagnetic material.
Embodiment 19. The powder separation device (10) according to any of the embodiments 1 to 18, characterized in that the least one powder removal unit (60), in particular at least one powder removal flap (60), is configured to be in a, preferably wiping or scraping, contact with the circumference of the drum body (12).
Embodiment 20. The powder separation device (10) according to any of the embodiments 3 to 19, characterized in that the longitudinal direction of the drum body (12) is arranged in a non-vertical direction, preferably in a horizontal direction, in particular with an inclination angle between 0° to 60°, preferably to 45° or 30° in relation to a horizontal plane.
Embodiment 21. A use of a powder separation device (10) according to any of the embodiments 1 to 20 for separating of a metallic powder material mix, wherein the metallic powder material mix comprises magnetic, in particular ferromagnetic, metallic powder particles and non-magnetic metallic powder particles.
Embodiment 22. A method for operating an apparatus (A) for processing powder material for manufacturing three-dimensional workpieces, in particular an apparatus (A) for manufacturing three-dimensional workpieces, further in particular an apparatus (A) for manufacturing three-dimensional workpieces by exposing powder layers to electromagnetic radiation or particle radiation in a process chamber, wherein a metallic powder material mix, comprising magnetic, in particular ferromagnetic, metallic powder particles and nonmagnetic powder particles, preferably nonmagnetic metallic powder particles, is separated by means of a powder separating device (10) according to any of the embodiments 1 to 21.
Embodiment 23. An apparatus (A) for processing powder material for manufacturing three-dimensional workpieces, in particular an apparatus (A) for manufacturing three-dimensional workpieces, further in particular an apparatus (A) for manufacturing three-dimensional workpieces by exposing powder layers to electromagnetic radiation or particle radiation in a process chamber, wherein the apparatus (A) has at least one powder separation device (10) according to any of the embodiments 1 to 21 and/or wherein the apparatus (A) is configured to be operated according to a method according to embodiment 22.

### List of References

- 10: separation drum
- 12: drum body
- 14: fin
- 15: chute
- 16: inlet port
- 17: chute
- 18: outlet port
- 20: arrangement
- 22: magnet
- 25: fluid bed
- 30: funnel
- 32: opening
- 40: tube
- 60: flap

- A: apparatus

## Claims

1. A powder separation device (10) of an apparatus (A) for processing powder material for manufacturing three-dimensional workpieces, in particular an apparatus (A) for manufacturing three-dimensional workpieces, for separating a metallic powder material mix of magnetic, in particular ferromagnetic, metallic powder particles and nonmagnetic powder particles, preferably nonmagnetic metallic powder particles, wherein the powder separation device (10) comprises a helical-like or spiral-like conveyance path, in particular for the magnetic metallic powder particles, and/or wherein at least one, preferably actively operable or operated, powder removal unit (60) is provided in the, preferably a helical-like or spiral-like, conveyance path of the metallic powder particles, in particular of the magnetic metallic powder particles.

2. The powder separation device (10) according to claim 1, **characterized in that** a, preferably movable or rotatable, arrangement (20) of magnets (22) is provided for the movement of the magnetic metallic powder particles along the helical-like or spiral-like conveyance path, wherein the arrangement (20) of magnets (22) is enclosed by the helical-like or spiral-like conveyance path.

3. The powder separation device (10) according to claim 2, **characterized in that** the powder separation device (10) comprises a, preferably hollow-cylindrical or hollow, drum body (12), wherein the drum body (12) has an inner side and an outer side and a longitudinal direction and an outer circumference, wherein the arrangement (20) of magnets (22) is provided in the inner side the drum body (12), wherein the drum body (12) and the arrangement (20) of magnets (22) are movable, in particular rotatable, relative to one another and wherein the helical-like or spiral-like conveyance path for the magnetic metallic powder particles is provided on the outer circumference of the drum body (12).

4. The powder separation device (10) according to any of the claims 1 to 3, **characterized in that** the powder separation device (10) comprises a, preferably hollow-cylindrical or hollow, drum body (12), wherein the drum body (12) has an inner side and an outer side and a longitudinal direction and an outer circumference, wherein the at least one, preferably actively operable or operated, powder removal unit (60) is arranged at the outer side of the drum body (12).

5. The powder separation device (10) according to claim 3 or 4, **characterized in that** at least one helical fin (14), provided on the outer side of the drum body (12) along the longitudinal direction, and/or at least one helical groove, provided on the outer side of the drum body (12) along the longitudinal direction, are configured to form the, preferably a helical-like or spiral-like, conveyance path on the outer circumference of the drum body (12),
wherein in particular the at least one helical fin (14) and/or at least one helical groove extend on the outer side of the drum body (12) between an inlet port for the metallic powder mix and an outlet port for the separated magnetic, in particular ferromagnetic, metallic powder particles of the metallic powder material mix.

6. The powder separation device (10) according to any of the claims 1 to 5, **characterized in that** a housing or an enclosure is provided for the conveyance path and/or for the at least one helical fin (14) and/or at least one helical groove
wherein in particular the housing or the enclosure has a helical-like form extending along the longitudinal direction of the drum body (12).

7. The powder separation device (10) according to claim 5 or 6, **characterized in that** the at least one helical fin (14) and/or at least one helical groove are configured to guide the magnetic metallic powder particles of the metallic powder material mix along the outer circumference of the drum body (12) in a helical-like direction.

8. The powder separation device (10) according to any of the claims 3 to 7, **characterized in that** the conveyance path for the magnetic metallic powder particles is longer than the circumference length of the drum body (12), wherein in particular the conveyance path for the magnetic metallic powder particles is n times greater (n > 1,0; 1,1; 1,2; ...) than the circumference length of the drum body (12)
and/or that the drum body (12) is stationary and the arrangement (20) of magnets (22) is rotatable around an axis of rotation, wherein in particular a drive is provided for rotating the arrangement (20) of magnets (22) inside the drum body (12).

9. The powder separation device (10) according to any of the claims 1 to 8, **characterized in that** the powder separation device (10) comprises a discharge port (30) for the nonmagnetic powder particles, preferably nonmagnetic metallic powder particles, wherein in particular discharge port (30) for the nonmagnetic particles is arranged below the drum body (12) and/or wherein in particular the discharge port (30) for the nonmagnetic powder particles, preferably nonmagnetic metallic powder particles, is arranged between an inlet port (16) for the metallic powder mix and an outlet port (18) for the separated magnetic metallic powder particles
and/or that the powder separation device (10) comprises a feeding conveyor for conveying the metallic powder material mix to be separated, preferably arranged at the inlet port, to the conveyance path, in particular to the drum body (12), and/or a removal conveyor for conveying the magnetic metallic powder particles from the conveyance path, in particular from the drum body (12), preferably arranged at the outlet port.

10. The powder separation device (10) according to any of the claims 2 to 9, **characterized in that** the arrangement (20) of magnets (22) comprises the plurality of, in particular electromagnetic, magnets (22), wherein the magnets (22) are arranged in a predetermined and/or regular order, preferably inside the drum body (12),
wherein in particular the arrangement (20) of magnets (22) comprises, preferably parallel, rows of magnets (22), each having a longitudinal extension, and a middle axis, preferably an axis of rotation of the arrangement (20) of magnets (22), wherein the rows of magnets (22) are arranged along the middle axis in regular distances and/or the longitudinal extensions of magnets (22) are arranged parallel to the middle axis or the longitudinal extensions of the magnets (22) are arranged with a skewed angle to the middle axis
and/or wherein in particular the magnets (22) are arranged in a helical-like or spiral-like form along the longitudinal direction of the drum body (12).

11. The powder separation device (10) according to any of the claims 1 to 10, **characterized in that** the least one powder removal unit (60) is arranged at an outlet port (18) of the powder separation device (10) for the magnetic metallic powder particles
and/or that the at least one powder removal unit (60) comprises at least one, preferably movable or pivotable, powder removal flap (60) or an array of, preferably movable or pivotable, powder removal flaps (60), wherein in particular the at least one powder removal flap (60) or the flaps (60) are made from a magnetic, in particular ferromagnetic material
and/or that the least one powder removal unit (60), in particular at least one powder removal flap (60), is configured to be in a, preferably wiping or scraping, contact with the circumference of the drum body (12).

12. The powder separation device (10) according to any of the claims 2 to 11, **characterized in that** the longitudinal direction of the drum body (12) is arranged in a non-vertical direction, preferably in a horizontal direction, in particular with an inclination angle between 0° to 60°, preferably to 45° or 30° in relation to a horizontal plane.

13. A use of a powder separation device (10) according to any of the claims 1 to 12 for separating of a metallic powder material mix, wherein the metallic powder material mix comprises magnetic, in particular ferromagnetic, metallic powder particles and non-magnetic metallic powder particles.

14. A method for operating an apparatus (A) for processing powder material for manufacturing three-dimensional workpieces, in particular an apparatus (A) for manufacturing three-dimensional workpieces, further in particular an apparatus (A) for manufacturing three-dimensional workpieces by exposing powder layers to electromagnetic radiation or particle radiation in a process chamber, wherein a metallic powder material mix, comprising magnetic, in particular ferromagnetic, metallic powder particles and nonmagnetic powder particles, preferably nonmagnetic metallic powder particles, is separated by means of a powder separating device (10) according to any of the claims 1 to 12.

15. An apparatus (A) for processing powder material for manufacturing three-dimensional workpieces, in particular an apparatus (A) for manufacturing three-dimensional workpieces, further in particular an apparatus (A) for manufacturing three-dimensional workpieces by exposing powder layers to electromagnetic radiation or particle radiation in a process chamber, wherein the apparatus (A) has at least one powder separation device (10) according to any of the claims 1 to 13 and/or wherein the apparatus (A) is configured to be operated according to a method according to claim 14.
